# FASCICULE DE BREVET EUROPEEN

(11) **EP 0 825 203 B1**
(45) Date de publication et mention de la délivrance du brevet: **20.02.2002**
(21) Numéro de dépôt: 97401909.3
(22) Date de dépôt: 08.08.1997
(51) Int. Cl.: C08F 8/42, C09D 5/16

(54) **Compositions de résines (meth)acryliques pour peintures marines antisalissures**
(Meth)Acryl-Harzzusammensetzungen für See-Antifäulnisfarben
(Meth)Acrylic resin compositions for marine antifouling coatings

(30) Priorité: 22.08.1996 FR 9610374
(43) Date de publication de la demande: 25.02.1998
(73) Titulaire: Atofina, 92800 Puteaux (FR)
(72) Inventeur: Vanhoye, Didier, 60600 Breuil Le Vert (FR); Camail, Michel, 83170 Brignoles (FR); Margaillan, André, 83136 Gareoult (FR); Vernet, Jean-Louis, 83210 La Farlede (FR); Humbert, Marie, 13001 Marseille (FR)
(74) Mandataire: Rieux, Michel

(56) Documents cités:
- EP-A- 0 259 096
- EP-A- 0 260 958
- EP-A- 0 286 243
- BASE DE DONN ES "CHEMICAL ABSTRACTS" (SERVEUR: STN); Abrégé 111: 134 910, Colombus, OH, USA; & JP-A-01 014 204 (DAINIPPON INK & CHEM.,INC)18 Janvier 1989 XP002044437

## Description

La présente invention concerne la préparation de résines (méth)acryliques pour peintures marines antisalissures, possédant un caractère autopolissant et ne présentant pas d'impact écotoxicologique négatif vis-à-vis de l'environnement marin. L'invention concerne également les compositions de peintures correspondantes.

A partir des années 60, les peintures antisalissures autopolissantes à base de dérivés organostanniques ont été développées et largement utilisées à travers le monde.

L'utilisation de ces liants présente de nombreux avantages : augmentation de la durée d'action, diminution à performances égales de la quantité de produit actif à incorporer, absence de phénomènes de corrosion intermétallique. Contrairement aux peintures conventionnelles, l'utilisation de peintures autopolissantes permet d'obtenir une libération d'espèces actives constante dans le temps. De plus, l'érosion progressive du polymère permet d'obtenir une amélioration de l'état de surface et une diminution de la rugosité entre deux carénages. Cependant, il a été montré, après de nombreuses études, que de fortes concentrations en étain provoqueraient des anomalies dans la calcification des huîtres et une diminution du captage du naissain. A la suite de ces études, l'emploi de dérivés stanniques a fait l'objet d'interdiction en France pour les embarcations de longueur inférieure à 25 mètres et de restrictions similaires dans les autres pays.

La recherche d'une nouvelle résine apportant au film de peinture antisalissure les mêmes propriétés d'autopolissage a constitué depuis cette date un axe de recherche important. Ainsi, la préparation de polymères comportant des motifs triorganosilyle a été développée par différentes compagnies pour obtenir des polymères présentant de bonnes propriétés autopolissantes, mais toutefois au prix élevé.

Pour tenter d'apporter une solution à ce problème, il a été envisagé de remplacer le silicium par le titane dont on connaît par ailleurs la stabilité et la non-toxicité sous forme oxyde. L'utilisation de monomères acryliques portant des groupes titanates a été décrite pour la préparation de particules polymères réticulées utilisables comme charges dans les compositions de peintures marines antisalissures : JP 57 565/87, EP 286 243, JP 57 564/87, JP 86-217 781, EP 260 958, JP 86-200 344, EP 259 096. Ces particules posséderaient la propriété de se désagréger en milieu légèrement basique, en particulier dans l'eau de mer, et conduisent à des revêtements autopolissables.

Cependant, ces brevets ne décrivent pas la préparation de résines organosolubles utiles comme liants dans des compositions de peintures marines antisalissures.

La Société déposante a maintenant découvert de manière surprenante que, lors de l'estérification de polymères portant des fonctions acide méthacrylique par des tétraalcoxytitanes, l'emploi d'un excès de ces derniers par rapport aux fonctions acide permettait d'obtenir des produits de réaction organosolubles, utiles comme liants dans des peintures marines, tandis que les rapports stoechiométriques utilisés dans les exemples des brevets précités conduisent à l'obtention de gels lors de l'estérification. Il en est de même lorsque l'on copolymérise par voie radicalaire un méthacrylate de trialcoxytitane avec au moins un comonomère en présence de tétraalcoxytitane. Les produits obtenus dans les deux cas sont, avant évaporation, solubles dans les solvants organiques usuels (toluène, xylène ou éthers-alcools), dans lesquels ils sont généralement préparés. Après évaporation du solvant, ils ne sont plus solubles (dans ledit solvant ou dans lesdits solvants). La vitesse d'érosion de revêtements (peintures) préparés avec ces produits comme liants, évaluée par mesure directe sur les formulations de peintures, est constante dans le temps.

La présente invention a donc d'abord pour objet une composition organosoluble de résine (méth)acrylique, caractérisée par le fait qu'elle comprend un polymère comportant des motifs dérivés de l'acide méthacrylique estérifiés par des groupes -Ti(OR)₃, en mélange avec du Ti(OR)₄ libre, lequel représente l'excès du Ti(OR)₄ ayant été introduit pour la préparation dudit polymère en quantité suffisante pour que la composition résultante soit organosoluble et non sous forme de gel, R représentant l'un parmi éthyle, isopropyle, n-butyle, t-butyle, 2-éthylhexyle et t-amyle.

D'une manière générale, il a été observé que plus les radicaux R sont encombrés, moins l'excès de Ti(OR)₄ a besoin d'être important pour parvenir à une composition organosoluble.

On peut mentionner comme compositions organosolubles particulières selon l'invention, les suivantes (pour un total de 100% de polymère estérifié + Ti(OR)₄ libre) :

| Résine | Polymère | | Ti(OR)₄ libre |
|---|---|---|---|
| | Motifs d'acide méthacrylique estérifié par Ti(OR)₄ | Motifs de comonomère(s) | |
| % molaire | 2-17 | 23-89 | 7-69 |
| % massique | 4-27 | 5-63 | 22-86 |

Le polymère estérifié est notamment un copolymère comportant des motifs acide méthacrylique estérifié et des motifs d'au moins un comonomère choisi parmi les (méth)acrylates d'alkyle en particulier en C₁-C₆, tels que le méthacrylate de méthyle, le méthacrylate de butyle, etc.

La composition organosoluble se trouve généralement en un milieu solvant constitué par le toluène, le xylène, les éthers alcools comme le 2-méthoxyéthanol ou le 1-méthoxy 2-propanol, et leurs mélanges. L'extrait sec de la composition organosoluble est généralement de 20 - 80% en poids environ, préférentiellement de 30 à 60% en poids environ.

Conformément à un premier mode de réalisation de la présente invention, la composition organosoluble est le produit d'estérification en milieu solvant d'un polymère comportant des motifs dérivés de l'acide méthacrylique par Ti(OR)₄, le rapport molaire Ti/COOH étant supérieur à 1, pouvant aller jusqu'à 17/1, voire au-delà, étant de préférence compris entre 3/1 et 10/1.

Conformément à un second mode de réalisation de la présente invention, la composition organosoluble est le produit de copolymérisation radicalaire en milieu solvant d'au moins un acide méthacrylique estérifié par Ti(OR)₃ et d'au moins un comonomère, en présence de Ti(OR)₄, dans une quantité qui aurait correspondu à une réaction entre l'acide méthacrylique et Ti(OR)₄ avec un rapport molaire 1/x, x > 1. On peut indiquer en particulier les mêmes fourchettes de rapport molaire Ti/COOH que dans le premier mode de réalisation.

Une demande de brevet français déposée ce jour au nom de la Société déposante et ayant pour titre : "Composés métallo-organiques insaturés dérivés du titane et leur procédé de préparation" décrit les composés de formule (I): 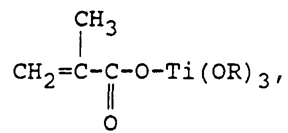 où R = tertiobutyle, tertioamyle ou 2-éthylhexyle. Pour préparer les composés (I), on fait réagir l'acide méthacrylique avec un tétraalcoxytitane Ti(OR)₄, où R = isopropyle ou tertiobutyle pour obtenir le composé (I) correspondant, ou avec Ti(OR)(OtAm)₃, où R = isopropyle ou tertiobutyle et tAm = tertioamyle, pour obtenir un composé (I) avec R = tertioamyle, les composés (I) avec R = isopropyle ou tertiobutyle représentant par ailleurs des produits intermédiaires de synthèse que l'on peut faire réagir avec l'alcool tertioamylique ou avec le 2-éthylhexanol, pour obtenir un composé (I) dans lequel R représente respectivement tertioamyle ou 2-éthylhexyle. Les composés avec R = éthyle, isopropyle et n-butyle sont préparés d'après des modes opératoires connus.

Les conditions de polymérisation utilisées dans le cadre de la préparation des résines sont bien connues de l'homme du métier, la polymérisation étant menée à une température comprise notamment entre 40 et 85°C, en présence d'amorceurs radicalaires azoïques, tels que l'azobisisobutyronitrile (AIBN ou AZDN commercialisé par le Société ELF ATOCHEM), ou le 2,2'-azobis(2,4-diméthylvaléronitrile) (AIVN) ou d'amorceurs radicalaires peroxydiques, tels que le peroxyde de dibenzoyle, à raison notamment de 0,05 à 1,5% en poids par rapport au poids total des monomères et de l'excès de Ti(OR)₄.

Dans ce dernier cas, la composition organosoluble peut contenir aussi le ROH provenant de l'estérification de l'acide méthacrylique par Ti(OR)₄, le produit brut de ladite estérification ayant été engagé dans la réaction de copolymérisation. Dans ce cas, l'alcool formé joue le rôle de cosolvant.

La présente invention a également pour objet une composition de peinture marine antisalissure, caractérisée par le fait qu'elle comprend, comme liant, la composition telle que définie ci-dessus. Le liant est présent dans la composition de peinture par exemple à raison de 30 à 40% en poids du total.

La composition de peinture est sinon classique, pouvant comprendre les autres ingrédients usuels tels que :
- les adjuvants, tels que la lécithine de soja, l'huile de ricin hydrogénée modifiée, les stabilisants de viscosité (tels que le Viscostab CNF 896 fabriqué par la Société ELF AQUITAINE) ;
- les pigments et charges, tels que l'oxyde de zinc non aciculaire, l'oxyde cuivreux et l'oxyde de titane rutile ; ; et
- les solvants et diluants, tels que le solvant naphta, le toluène et le xylène.

Les exemples suivants illustrent la présente invention sans toutefois en limiter la portée.

Les résines utilisées font partie de la série Elvacite® ; elles ont été fournies à la Société déposante par la Société SPCI et ont été fabriquées par la Société ICI :
- Elvacite® 2550 :: copolymère méthacrylique dont l'analyse en RMN ¹H et RMN ¹³C montre qu'il s'agit d'un terpolymère Acide Méthacrylique (AMA) - Méthacrylate de Méthyle (MAM) - Méthacrylate de n-Butyle (MABu) dans des proportions molaires 4-14-82 ; indice d'acide indiqué par le fabricant = 17 ; Tg = 36°C : Mw = 57 700, Mp = 120 700 et I = 2,09 (masses moléculaires mesurées par GPC).
- Elvacite® 2669 :: résine acrylique soluble dans l'eau, légèrement alcaline ; il s'agit d'un tétrapolymère qui comprend, outre les motifs acide méthacrylique, les motifs méthacrylate de méthyle, méthacrylate d'éthyle et acrylate d'éthyle. Indice d'acide indiqué par le fabricant = 124; masse moléculaire indiquée par le fabricant = 60 000 ; Tg = 100°C.

Dans ces exemples, ES signifie extrait sec ; nBu : n-butyle ; et EH : 2-éthylhexyle.

### EXEMPLE 1 : Estérification de la résine Elvacite® 2550 par Ti(OnBu)₄ à un rapport molaire Ti/COOH de 7/1 et à ES = 30%

Dans un ballon monocol de 100 ml, on solubilise 5 g de résine Elvacite® 2550 dans 20 g de toluène anhydre. On effectue ensuite l'addition de 3,62 g de tétrabutoxytitane pur, et on soumet le mélange à une agitation vigoureuse. On constate immédiatement une forte élévation de la viscosité du mélange, puis rapidement, cela évolue vers une solution limpide, homogène, moyennement visqueuse. Cette solution reste stable si elle est conservée dans un récipient hermétique.

Cette réaction est effectuée à froid. Le polymère estérifié présente une excellente solubilité dans le toluène anhydre ou le xylène anhydre.

Composition obtenue (hors solvant) :

| Composition | Polymère : Motifs de | | | Ti(OnBu)₄ |
|---|---|---|---|---|
| | "AMA-Ti_{nBu}" | MAM | MABu | |
| % molaire | 3,2 | 11,3 | 66,1 | 19,4 |
| % massique | 6,2 | 6,2 | 51,5 | 36,6 |

### EXEMPLE 2 : Estérification de la résine Elvacite® 2550 par Ti(OEH)₄ à un rapport molaire Ti/COOH de 4/1 et à ES = 30%

Dans un ballon monocol de 100 ml, on solubilise 5 g de résine Elvacite® 2550 dans 19,8 g de toluène anhydre. On effectue ensuite l'addition de 3,50 g de tétra(2-éthylhexoxy)titane pur, et on soumet le mélange à une agitation vigoureuse. La viscosité s'élève immédiatement fortement, puis le mélange devient peu à peu moins visqueux. On obtient finalement une solution visqueuse, homogène, stable.

Cette réaction est effectuée à froid. Le polymère estérifié présente une excellente solubilité dans le toluène anhydre ou le xylène anhydre.

Composition obtenue (hors solvant) :

| Composition | Polymère : Motifs de | | | Ti(OEH)₄ |
|---|---|---|---|---|
| | "AMA-Ti_{EH}" | MAM | MABu | |
| % molaire | 3,6 | 12,5 | 73,2 | 10,7 |
| % massique | 9,6 | 6,4 | 53,1 | 30,9 |

### EXEMPLE 3 : Estérification de la résine Elvacite® 2669 par Ti(OEH)₄ à un rapport molaire Ti/COOH de 3/1 et à ES = 50%

Dans un ballon monocol de 100 ml, on solubilise 1 g de résine Elvacite® 2669 dans 4,75 g de 2-méthoxyéthanol anhydre. On effectue ensuite l'addition de 1,25 g de tétra(2-éthylhexoxy)titane pur, puis on soumet le mélange à une forte agitation. La viscosité devient immédiatement très importante, puis elle diminue progressivement. On obtient finalement une solution liquide visqueuse, homogène, stable.

Cette réaction est effectuée à froid. Elle conduit au polymère estérifié. Si on ajoute du toluène ou du xylène anhydre à la solution ainsi obtenue, il n'y a aucun problème de compatibilité. De même, le toluène (ou le xylène) peut être ajouté avant l'addition de Ti(OEH)₄.

Composition obtenue (hors solvant) :

| Composition | Polymère : Motifs de | | Ti(OEH)₄ |
|---|---|---|---|
| | "AMA-Ti_{EH}" | Comonomères | |
| % molaire | 16,3 | 51,1 | 32,6 |
| % massique | 26,3 | 16,6 | 57,1 |

### EXEMPLE 4 : Estérification de la résine Elvacite® 2669 par Ti(OEH)₄ à un rapport molaire Ti/COOH de 5/1 et à ES = 50%

Dans un ballon monocol de 100 ml, on solubilise 1 g de résine Elvacite® 2669 dans 3,11 g de 2-méthoxyéthanol anhydre. On rajoute ensuite 4,14 g de toluène anhydre, et on laisse le mélange sous agitation pendant quelques minutes.

On réalise alors l'addition de 6,25 g de Ti(OEH)₄ et on soumet ce mélange à une agitation vigoureuse. On constate immédiatement une forte augmentation de la viscosité du milieu, puis il y a peu à peu évolution vers un mélange homogène, liquide et visqueux. Ce mélange est stable s'il est conservé dans un récipient hermétique.

Cette réaction est effectuée à froid.

Composition obtenue (hors solvant) :

| Composition | Polymère : Motifs de | | Ti(OEH)₄ |
|---|---|---|---|
| | "AMA-Ti_{EH}" | Comonomères | |
| % molaire | 12,3 | 38,5 | 49,2 |
| % massique | 16,7 | 10,6 | 72,7 |

### EXEMPLE 5

On procède comme à l'Exemple 4, excepté que l'on remplace le 2-méthoxyéthanol par le 1-méthoxy 2-propanol et le toluène par le xylène, les solvants utilisés étant anhydres.

### EXEMPLES 6 à 8 : Formulations de peintures antisalissures

On a formulé les compositions suivantes (quantités exprimées en % en poids) :

**Tableau 1**

| Composition de peinture | Exemple 6 (de l'invention) | Exemple 7 (de l'invention) | Exemple 8 (de référence) |
|---|---|---|---|
| Liant | | | |
| Mélange tel qu'obtenu à l'Exemple 4 | 37,80 | | |
| Mélange tel qu'obtenu à l'Exemple 5 | | 37,80 | |
| Copolymère acrylate tributylétain à ES = 60% | | | 31,00 |
| | | | |
| Lécithine de soja | 0,30 | 0,30 | 0,30 |
| Huile de ricin hydrogénée modifiée | 0,90 | 0,90 | 0,90 |
| Viscostab CNF896 | 1,80 | 1,80 | 1,80 |

| Pigments et charges* | | | |
|---|---|---|---|
| Oxyde de zinc | 10,70 | 10,70 | 10,70 |
| Oxyde cuivreux | 38,10 | 38,10 | 38,10 |
| Oxyde de titane rutile | 1,00 | 1,00 | 1,00 |

| Solvants et diluants | | | |
|---|---|---|---|
| Solvant naphta | | | 6,00 |
| Toluène | 9,40 | | |
| Xylène | 10,20 | 9,40 | 10,20 |

L'ordre d'ajout était le suivant :
① liant
② lécithine de soja
③ huile de ricin hydrogénée modifiée
④ oxyde de titane rutile
⑤ Viscostab CNF 896
⑥ oxyde de zinc
⑦ oxyde cuivreux
⑧ solvants

Une formulation est réalisée en 10 minutes à 1/4 heure environ, par pesage et ajout successif des divers ingrédients dans une jarre en porcelaine. Il faut éviter de laisser la jarre ouverte entre deux pesées. Lorsque tous les ingrédients sont ajoutés, on introduit des billes de porcelaine de différents diamètres chargées d'assurer le broyage. Puis la jarre est close et le mélange est mis à broyer.

Les trois formulations présentaient une finesse d'environ 50 µm. Le broyage a été réalisé au planétaire (12 h au moins, 24 h au plus).

Dans les formulations des Exemples 6 et 7, le copolymère Elvacite® estérifié représentait 5,90%, et Ti(OEH)₄ en excès, 13%, ces pourcentages étant en poids.

Dans la formulation de l'Exemple 8, le copolymère sec représente 18,60 % en poids. Dans le liant de l'Exemple 6, le rapport pondéral 2-méthoxyéthanol/toluène est de 43/57, et dans le liant de l'Exemple 7, le rapport pondéral 1-méthoxy 2-propanol / xylène est de 43/57.

### EXEMPLE 9

On prépare une formulation en ajoutant à la formulation de l'Exemple 7, 10% en poids par rapport au liant sec de phtalate de di-butyle comme plastifiant.

### EXEMPLE 10 : Essai d'érosion au "Turbo-eroder"

Les conditions étaient les suivantes :

Le cylindre (ø = 4 à 5 cm) est fixé à un moteur par un axe central, et est à l'intérieur d'une turbine dont le rôle est d'éviter la formation d'un vortex. Le cylindre et la turbine sont plongés dans une cuve contenant 40 1 d'eau de mer ASTM, T = 40°C, pH = 8,3. Le moteur tourne à 620 tours/minute, soit 40 noeuds. Chaque quart de cylindre est enduit d'une formulation différente, dont une constitue la formulation de référence.

Les pertes d'épaisseur mesurées au cours du temps (en µm) sont rapportées dans le Tableau 2.

**Tableau 2**

| Formulation | Exemple 8 (de référence) | Exemple 6 (de l'invention) | Exemple 7 (de l'invention) | Exemple 9 (de l'invention) |
|---|---|---|---|---|
| to | 0 | 0 | 0 | 0 |
| to + 76 h | 4 | 0 | 5 | 3 |
| to + 133 h | 9 | 3 | 10 | 6 |
| to + 173 h | 13 | 7 | 13 | 8 |

On constate une perte d'épaisseur (mesurant l'érosion) qui est linéaire en fonction du temps.

### EXEMPLES 11 à 14 : Copolymérisation du méthacrylate de méthyle (MAM) et du méthacrylate de tri-n-butoxytitane ("AMA-Ti_{nBu}")

### Mode opératoire général

On prépare l'"AMA Ti_{nBu}" par la réaction équimolaire entre l'acide méthacrylique (AMA) et Ti(OnBu)₄, le butanol étant éliminé par distillation.

On rajoute à l'"AMA-Ti_{nBu}" la quantité suffisante de Ti(OnBu)₄ qui aurait correspondu à une réaction entre l'acide méthacrylique et Ti(OnBu)₄ avec un rapport molaire 1/x.

Pour la copolymérisation, le rapport molaire MAM/"AMA-Ti_{nBu}" est fixé à 95/5 ; il est équivalent à un rapport massique 44,3/55,7 si x = 7 et 35,8/64,2 si x = 10, le calcul étant effectué en intégrant le Ti(OnBu)₄ en excès dans "AMA-Ti_{nBu}".

On effectue la réaction dans un tube à sceller. On y introduit les divers réactifs, le solvant anhydre (toluène) et l'amorceur ((AIVN)), ce dernier étant utilisé à raison de 0,1% en poids par rapport à la masse totale MAM + AMA-Ti_{nBu} (ce dernier comprenant Ti(OₙBu)₄ en excès). On procède à 3 cycles de dégazage par congélation-vide-décongélation. Le tube est ensuite scellé à la flamme, puis immergé pendant 24 h dans un bain thermostaté à 60°C.

Les conditions de polymérisation que l'on fait varier et les résultats sont rapportés dans le Tableau 3 ci-après.

**Tableau 3**

| Exemple | 11 | 12 | 13 | 14 |
|---|---|---|---|---|
| 1/x | 1/7 | 1/7 | 1/10 | 1/10 |
| ES (%) | 80 | 30 | 80 | 30 |
| Masse MAM (g) | 3,54 | 1,33 | 2,86 | 1,07 |
| Masse "AMA-Ti_{nBu}" (g) | 4,46 | 1,67 | 5,14 | 1,93 |
| Masse Toluène (g) | 2,00 | 7,00 | 2,00 | 7,00 |
| Masse AIVN (mg) | 8,00 | 3,00 | 8,00 | 3,00 |

Composition de l'Exemple 11 (hors solvant) :

| Composition | Polymère : Motifs de | | Ti(OnBu)₄ |
|---|---|---|---|
| | "AMA-Ti_{nBu}" | MAM | |
| % molaire | 3,8 | 73,1 | 23,1 |
| % massique | 8,2 | 44,3 | 47,5 |

Composition de l'Exemple 13 (hors solvant) :

| Composition | Polymère : Motifs de | | Ti(OnBu)₄ |
|---|---|---|---|
| | "AMA-Ti_{nBu}" | MAM | |
| % molaire | 3,4 | 65,6 | 31,0 |
| % massique | 6,6 | 35,8 | 57,6 |

### EXEMPLES 15 à 18 : Copolymérisation du méthacrylate de méthyle (MAM) et du méthacrylate de tri(2-éthyl hexoxy)titane ("AMA-Ti_{EH}")

### Mode opératoire général conduisant directement au mélange "AMA-Ti_{EH}" + 2-éthylhexanol + excès de Ti(OEH)₄

On prépare l'"AMA-Ti_{EH}" par mélange d'AMA et de Ti(OEH)₄ en proportion molaire 1/4. Il y a réaction entre 1 équivalent de l'AMA et 1 équivalent de Ti(OEH)₄, avec formation de 2-éthylhexanol qui reste dans le milieu. Il y a donc 3 équivalents de Ti(OEH)₄ en excès.

On effectue la réaction dans un tube à sceller. On introduit les divers réactifs, le solvant anhydre (toluène) et l'amorceur (AIVN), ce dernier étant utilisé à raison de 0,1% en poids par rapport aux monomères (la masse totale MAM + AMA-Ti_{EH} (ce dernier comprenant Ti(OEH)₄ en excès). Après dégazage du mélange, le tube est scellé, puis il est plongé 48 h dans un bain thermostaté à 60°C.

Les conditions de polymérisation que l'on a fait varier et les résultats sont rapportés dans le Tableau 4 ci-après.

**Tableau 4**

| Exemple | 15 | 16 | 17 | 18 |
|---|---|---|---|---|
| Rapport molaire MAM/"AMA-Ti_{EH}"* | 95/5 | 95/5 | 70/30 | 70/30 |
| Rapport massique MAM/"AMA-Ti_{EH}" | 44,8/55,2 | 44,8/55,2 | 9,1/90,9 | 9,1/90,9 |
| ES (%) | 30 | 80 | 30 | 80 |
| Masse MAM (g) | 1,34 | 3,59 | 0,27 | 0,73 |
| Masse "AMA-TiEH" (g) | 1,66 | 4,42 | 2,73 | 7,27 |
| Masse Toluène (g) | 7,00 | 2,00 | 7,00 | 2,00 |
| Masse AIVN (mg) | 3,00 | 8,00 | 3,00 | 8,00 |

| | | | | |
|---|---|---|---|---|
| * calcul effectué en intégrant Ti(OEH)₄ en excès dans "AMA-Ti_{EH}". | | | | |

Composition de l'Exemple 16 (hors solvant) :

| Composition | Polymère : Motifs de | | Ti(OEH)₄ |
|---|---|---|---|
| | "AMA-Ti_{EH}" | MAM | |
| % molaire | 4,5 | 81,8 | 13,7 |
| % massique | 13,0 | 44,8 | 42,2 |

Composition de l'Exemple 18 (hors solvant) :

| Composition | Polymère : Motifs de | | Ti(OEH)₄ |
|---|---|---|---|
| | "AMA-Ti_{EH}" | MAM | |
| % molaire | 16,1 | 35,6 | 48,3 |
| % massique | 21,4 | 9,1 | 69,5 |

### EXEMPLES 19 (comparatif) et 20-21 (de l'invention) : Copolymérisation du méthacrylate de méthyle (MAM) et du méthacrylate de tri(2-éthyl hexoxy)titane ("AMA-Ti_{EH}")

On prépare l'"AMA-Ti_{EH}" comme décrit à l'Exemple 2 de la demande de brevet indiquée dans les présents Exemples 11-14.

On mélange ensuite l'"AMA-Ti_{EH}" avec 3 équivalents de Ti(OEH)₄ (Exemples 20-21). Ce mélange n'est pas effectué dans le cas de l'Exemple 19.

On copolymérise comme décrit dans les Exemples 11 à 18, à 60°C pendant 48 h, dans le toluène, avec 0,1% en poids d'AIVN comme initiateur, par rapport à la masse totale MAM + AMA-Ti_{EH} (ce dernier incluant l'excès de Ti(OEH)₄).

Les conditions de polymérisation que l'on a fait varier et les résultats sont rapportés dans le Tableau 5.

**Tableau 5**

| Exemple | 20 (comparatif) | 21 (de l'invention) | 22 (de l'invention) |
|---|---|---|---|
| Rapport 1/x* | 1/1 | 1/4 | 1/4 |
| Rapport massique MAM/"AMA-Ti_{EH}"** | 78,5/21,5 | 46,2/53,8 | 46,2/53,8 |
| Masse MAM (g) | 6,28 | 3,70 | 1,39 |
| Masse "AMA-TiEH" (g) | 1,72 | 4,30 | 1,16 |
| Masse Toluène (g) | 2 | 2 | 7 |
| Masse AIVN (mg) | 8 | 8 | 3 |
| Résultats Aspect final | gélifié coloré marron | liquide très faiblement jaune bien visqueux | liquide très légèrement coloré jaune faiblement visqueux |

| | | | |
|---|---|---|---|
| * défini aux Exemples 11-14 | | | |
| ** calcul effectué en intégrant Ti(OEH)₄ en excès. | | | |

## Revendications

1. Composition organosoluble de résine (méth)acrylique, **caractérisée par le fait qu'**elle comprend un polymère comportant des motifs dérivés de l'acide méthacrylique estérifiés par des groupes -Ti(OR)₃, en mélange avec du Ti(OR)₄ libre, lequel représente l'excès du Ti(OR)₄ ayant été introduit pour la préparation dudit polymère en quantité suffisante pour que la composition résultante soit organosoluble et non sous forme de gel, R représentant l'un parmi éthyle, isopropyle, n-butyle, t-butyle, 2-éthylhexyle et t-amyle, ladite composition étant le produit d'estérification en milieu solvant d'un polymère comportant des motifs dérivés de l'acide méthacrylique par Ti(OR)₄, le rapport molaire Ti/COOH étant supérieur à 1, ou étant le produit de copolymérisation radicalaire en milieu solvant d'au moins un acide méthacrylique estérifié par Ti(OR)₃ et d'au moins un comonomère en présence de Ti(OR)₄, dans une quantité qui aurait correspondu à une réaction entre l'acide méthacrylique et Ti(OR)₄ avec un rapport molaire 1/x, x > 1.

2. Composition selon la revendication 1, **caractérisée par** les proportions suivantes, pour un total de 100% de polymère estérifié + Ti(OR)₄ libre :
| Résine | Polymère | | Ti(OR)₄ libre |
|---|---|---|---|
| | Motifs d'acide méthacrylique estérifié par Ti (OR)₄ | Motifs de comonomère(s) | |
| % molaire | 2-17 | 23-89 | 7-69 |
| % massique | 4-27 | 5-63 | 22-86 |

3. Composition selon l'une des revendications 1 et 2, **caractérisée par le fait que** le polymère estérifié est un copolymère comportant des motifs acide méthacrylique estérifié et des motifs d'au moins un comonomère choisi parmi les (méth)acrylates d'alkyle, en particulier en C₁-C₆.

4. Composition de résine selon l'une des revendications 1 à 3, **caractérisée par le fait qu'**elle se trouve en milieu solvant constitué par le toluène, le xylène, les éthers alcools comme le 2-méthoxyéthanol ou le 1-méthoxy 2-propanol, et leurs mélanges.

5. Composition selon l'une des revendications 1 à 4, **caractérisée par le fait que** son extrait sec est de 20 - 80% en poids.

6. Composition selon l'une des revendications 1 à 5, **caractérisée par le fait qu'**elle est le produit d'estérification en milieu solvant d'un polymère comportant des motifs dérivés de l'acide méthacrylique Ti(OR)₄, le rapport molaire Ti/COOH étant compris entre 3/1 et 10/1.

7. Composition selon l'une des revendications 1 à 5, **caractérisée par le fait qu'**elle est le produit de copolymérisation radicalaire en milieu solvant d'au moins un acide méthacrylique estérifié par Ti(OR)₃ et d'au moins un comonomère, en présence de Ti(OR)₄, dans une quantité qui aurait correspondu à une réaction entre l'acide méthacrylique et Ti(OR)₄ avec un rapport molaire Ti/COOH compris entre 3/1 et 10/1.

8. Composition selon la revendication 7, **caractérisée par le fait qu'**elle contient aussi le ROH provenant de l'estérification de l'acide méthacrylique par Ti(OR)₄, le produit brut de ladite estérification ayant été engagé dans la réaction de copolymérisation.

9. Composition de peinture marine antisalissure, **caractérisée par le fait qu'**elle comprend, comme liant, la composition telle que définie à l'une des revendications 1 à 8.

10. Composition de peinture selon la revendication 9, **caractérisée par le fait que** le liant est présent dans la composition de peinture à raison de 30 à 40% en poids du total.

11. Composition selon l'une des revendications 9 et 10, **caractérisée par le fait qu'**elle comprend les autres ingrédients usuels tels que :
- les adjuvants, tels que la lécithine de soja, l'huile de ricin hydrogénée modifiée, les stabilisants de viscosité ;
- les pigments et charges, tels que l'oxyde de zinc non aciculaire, l'oxyde cuivreux et l'oxyde de titane rutile ; et
- les solvants et diluants, tels que le solvant naphta, le toluène et le xylène.

## Patentansprüche

1. In organischen Medien lösliche Zusammensetzung von (Meth)-acrylharz, **dadurch gekennzeichnet, daß** sie ein Polymer, das Einheiten enthält, die von Methacrylsäure abgeleitet und mit Gruppen -Ti(OR)₃ verestert sind, im Gemisch mit Ti(OR)₄ in freier Form enthält, das den Überschuß von Ti(OR)₄ repräsentiert, welches für die Herstellung des Polymers in einer Menge zugegeben wurde, die ausreichend ist, damit die resultierende Zusammensetzung in organischen Medien löslich ist und nicht in Form von Gel vorliegt, wobei R unter Ethyl, Isopropyl, n-Butyl, t-Butyl, 2-Ethylhexyl und t-Amyl ausgewählt ist, wobei es sich bei der Zusammensetzung um das Produkt der Veresterung eines Polymers, das von Methacrylsäure abgeleitete Einheiten aufweist, und Ti(OR)₄ in einem Lösemittelmedium, wobei das Molverhältnis Ti/COOH über 1 liegt, oder das Produkt der radikalischen Copolymerisation mindestens einer mit Ti(OR)₃ veresterten Methacrylsäure und mindestens eines Comonomers in einem Lösemittelmedium in Gegenwart von Ti(OR)₄, das in einer Menge entsprechend einer Reaktion von Methacrylsäure und Ti(OR)₄ in einem Molverhältnis 1/x mit x >1 vorliegt, handelt.

2. Zusammensetzung nach Anspruch 1, **gekennzeichnet durch** die folgenden Mengenanteile für insgesamt 100 % verestertes Polymer + freies Ti(OR)₄:
| Harz | Polymer | | freies Ti(OR)₄ |
|---|---|---|---|
| | mit Ti(OR)₄ veresterte Methacrylsäureeinheiten | Einheiten des Comonomers (der Comonomere) | |
| Mol-% | 2-17 | 23-89 | 7-69 |
| Masse-% | 4-27 | 5-63 | 22-86 |

3. Zusammensetzung nach einem der Ansprüche 1 und 2, **dadurch gekennzeichnet, daß** das veresterte Polymer ein Copolymer ist, das Einheiten von veresterter Methacrylsäure und Einheiten mindestens eines Comonomers aufweist, das unter Alkyl(meth)acrylaten und insbesondere C₁₋₆-Alkyl(meth)acrylaten ausgewählt ist.

4. Zusammensetzung nach einem der Ansprüche 1 bis 3, **dadurch gekennzeichnet, daß** sie sich in einem Lösungsmittelmedium befindet, das aus Toluol, Xylol oder Alkoholethern, wie 2-Methoxyethanol oder 1-Methoxy-2-propanol, oder deren Gemischen besteht.

5. Zusammensetzung nach einem der Ansprüche 1 bis 4, **dadurch gekennzeichnet, daß** ihr Trockenextrakt 20 bis 80 Gew.-% ausmacht.

6. Zusammensetzung nach einem der Ansprüche 1 bis 5, **dadurch gekennzeichnet, daß** sie das Produkt der Veresterung eines Polymers, das von Methacrylsäure abgeleitete Einheiten enthält, und Ti(OR)₄ in einem Lösungsmittelmedium ist, wobei das Molverhältnis Ti/COOH im Bereich von 3/1 bis 10/1 liegt.

7. Zusammensetzung nach einem der Ansprüche 1 bis 5, **dadurch gekennzeichnet, daß** sie das Produkt der radikalischen Copolymerisation mindestens einer mit Ti(OR)₃ veresterten Methacrylsäure und mindestens eines Comonomers in einem Lösungsmittelmedium in Gegenwart von Ti(OR)₄ ist, das in einer Menge entsprechend einer Reaktion von Methacrylsäure und Ti(OR)₄ mit einem Molverhältnis von Ti/COOH im Bereich von 3/1 bis 10/1 vorliegt.

8. Zusammensetzung nach Anspruch 7, **dadurch gekennzeichnet, daß** sie ferner ROH enthält, das aus der Veresterung der Methacrylsäure mit Ti(OR)₄ stammt, wobei das Rohprodukt dieser Veresterung bei der Copolymerisation eingesetzt wurde.

9. Fäulnisverhütende Anstrichmittel für Schiffe, **dadurch gekennzeichnet, daß** es als Bindemittel eine Zusammensetzung nach einem der Ansprüche 1 bis 8 enthält.

10. Anstrichmittel nach Anspruch 9, **dadurch gekennzeichnet, daß** das Bindemittel in der Zusammensetzung des Anstrichmittels in einer Menge von 30 bis 40 Gew.-% des Gesamtgewichts vorliegt.

11. Anstrichmittel nach einem der Ansprüche 9 und 10, **dadurch gekennzeichnet, daß** es weitere übliche Bestandteile enthält, beispielsweise:
- Hilfsstoffe, wie Sojalecithin, modifiziertes, hydriertes Ricinusöl, Viskositätsstabilisatoren;
- Pigmente und Füllstoffe, wie nicht nadelförmiges Zinkoxid, Kupferoxid und Titanoxid (Rutil); und
- Lösungsmittel und Verdünnungsmittel, beispielsweise Naphtha, Toluol und Xylol.

## Claims

1. Organosoluble (meth)acrylic resin composition **characterized in that** it includes a polymer containing units derived from methacrylic acid which are esterified with -Ti(OR)₃ groups, mixed with free Ti(OR)₄, which represents the excess of Ti(OR)₄ which has been introduced for the preparation of the said polymer in sufficient quantity for the resulting composition to be organosoluble and not in gel form, R denoting one of ethyl, isopropyl, n-butyl, t-butyl, 2-ethylhexyl and t-amyl, the said composition being the product of esterification in a solvent medium of a polymer containing units derived from methacrylic acid with Ti(OR)₄, the Ti/COOH molar ratio being higher than 1, or being the product of radical copolymerization in a solvent medium of at least one methacrylic acid esterified with Ti(OR)₃ and of at least one comonomer, in the presence of Ti(OR)₄, in a quantity which would have corresponded to a reaction between methacrylic acid and Ti(OR)₄ with a molar ratio 1/x , x > 1.

2. Composition according to Claim 1, **characterized by** the following proportions for a total of 100 % of esterified polymer + free Ti(OR)₄:
| Resin | Polymer | | Free Ti(OR)₄ |
|---|---|---|---|
| | Methacrylic acid units esterified with Ti(OR)₄ | Comonomer units | |
| molar % | 2-17 | 23-89 | 7-69 |
| mass % | 4-27 | 5-63 | 22-86 |

3. Composition according to either of Claims 1 and 2, **characterized in that** the esterified polymer is a copolymer containing esterified methacrylic acid units and units of at least one comonomer chosen from alkyl, in particular C₁-C₆, (meth)acrylates.

4. Resin composition according to one of Claims 1 to 3, **characterized in that** it is in a solvent medium consisting of toluene, xylene, alcohol ethers like 2-methoxyethanol or 1-methoxy-2-propanol, and mixtures thereof.

5. Composition according to one of Claims 1 to 4, **characterized in that** its solids content is 20-80 % by weight.

6. Composition according to one of Claims 1 to 5, **characterized in that** it is the product of esterification in a solvent medium of a polymer containing units derived from methacrylic acid with Ti(OR)₄, the Ti/COOH molar ratio being between 3/1 and 10/1.

7. Composition according to one of Claims 1 to 5, **characterized in that** it is the product of radical copolymerization in a solvent medium of at least one methacrylic acid esterified with Ti(OR)₃ and of at least one comonomer, in the presence of Ti(OR)₄, in a quantity which would have corresponded to a reaction between methacrylic acid and Ti(OR)₄ with a Ti/COOH molar ratio of between 3/1 and 10/1.

8. Composition according to Claim 7, **characterized in that** it also contains the ROH originating from the esterification of the methacrylic acid with Ti(OR)₄, the crude product of the said esterification having been introduced into the copolymerization reaction.

9. Marine antifouling paint composition **characterized in that** it includes, as binder, the composition as defined in one of Claims 1 to 8.

10. Paint composition according to Claim 9, **characterized in that** the binder is present in the paint composition in a proportion of from 30 to 40 % by weight of the total.

11. Composition according to either of Claims 9 and 10, **characterized in that** it includes the usual other ingredients such as:
- adjuvants, such as soya lecithin, modified hydrogenated castor oil and viscosity stabilizers;
- pigments and fillers, such as nonacicular zinc oxide, cuprous oxide and rutile titanium oxide; and
- solvents and diluents, such as solvent naphtha, toluene and xylene.
